(19) **Europäisches Patentamt**
**European Patent Office**
**Office européen des brevets**

(11) **EP 2 978 151 A2**

(12) **EUROPEAN PATENT APPLICATION**
published in accordance with Art. 153(4) EPC

(43) Date of publication:
**27.01.2016 Bulletin 2016/04**

(21) Application number: **14768486.4**

(22) Date of filing: **21.03.2014**

(51) Int Cl.:
**H04J 11/00** (2006.01) **H04W 4/06** (2009.01)

(86) International application number:
**PCT/KR2014/002402**

(87) International publication number:
**WO 2014/148861 (25.09.2014 Gazette 2014/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.03.2013 US 201361803797 P**

(71) Applicant: **LG Electronics Inc.**
**Seoul 150-721 (KR)**

(72) Inventors:
- **KIM, Jinmin**
  **Seoul 137-893 (KR)**
- **KIM, Kitae**
  **Seoul 137-893 (KR)**
- **CHUNG, Jaehoon**
  **Seoul 137-893 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **BROADCAST CHANNEL METHOD, METHOD FOR TRANSCEIVING BROADCAST CHANNEL SIGNAL, AND DEVICE SUPPORTING THE SAME**

(57) The present invention provides a method for transceiving a broadcast channel signal and/or a control channel signal in a wireless access system and devices for supporting the same. The method for receiving a physical broadcast channel (PBCH) signal in a wireless access system, according to one embodiment of the present invention, comprises steps of: receiving synchronization signals; obtaining a physical cell identifier (PCID) on the basis of the synchronization signals; calculating a subcarrier index for indicating a PBCH area on the basis of the PCID; detecting the PBCH area by carrying out blind-decoding from a subcarrier, in which a subcarrier index is shown, in the subframe; and receiving a PBCH signal which is broadcasted through the PBCH area.

FIG. 9

**Description**

[Technical Field]

The present invention relates to a wireless access system and, more particularly, to a method for allocating a new broadcast channel, a method for allocating a new common control channel region, a method for transmitting and receiving a broadcast channel signal and/or a control channel signal, and a device supporting the same.

[Background Art]

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

[Disclosure]

[Technical Problem]

An object of the present invention devised to solve the problem lies in a method for configuring a new broadcast channel and a control channel.
Another object of the present invention devised to solve the problem lies in a method for configuring a new broadcast channel and control channel in a physical downlink shared channel region in a small cell environment using a super high frequency band.
Another object of the present invention devised to solve the problem lies in a method for allocating a broadcast channel and a control channel in order to reduce inter-cell interference.
Another object of the present invention devised to solve the problem lies in a method for easily acquiring a broadcast channel and/or control channel region at a user equipment (UE).
Another object of the present invention devised to solve the problem lies in a device supporting such methods.
It will be appreciated by persons skilled in the art that the objects that could be achieved with the present invention are not limited to what has been particularly described hereinabove and the above and other objects that the present invention could achieve will be more clearly understood from the following detailed description.

[Technical Solution]

The present invention discloses a method for allocating a new broadcast channel and a method for allocating a new common control channel region, a method for transmitting and receiving a broadcast channel signal and/or a control channel, and a device supporting the same.
The object of the present invention can be achieved by providing a method for receiving a physical broadcast channel (PBCH) signal in a wireless access system including receiving synchronization signals, acquiring a physical cell identifier (PCID) based on the synchronization signals, calculating a subcarrier index indicating a PBCH region based on the PCID, performing blind decoding in a subframe starting from a subcarrier indicated by the subcarrier index to detect the PBCH region and receiving the PBCH signal broadcast via the PBCH region.
In another aspect of the present invention, provided herein is a user equipment (UE) for receiving a physical broadcast channel (PBCH) signal in a wireless access system including a receiver and a processor configured to detect the PBCH signal, wherein the processor is configured to control the receiver to receive synchronization signals, acquire a physical cell identifier (PCID) based on the synchronization signals, calculate a subcarrier index indicating a PBCH region based on the PCID, perform blind decoding in a subframe starting from a subcarrier indicated by the subcarrier index to detect the PBCH region, and control the receiver to receive the PBCH signal broadcast via the PBCH region.
The subcarrier index may be calculated using the PCID, the number of downlink resource blocks allocated to the subframe and the number of subcarriers included in the downlink resource block.
The PBCH region may be allocated to predetermined orthogonal frequency division multiplexing (OFDM) symbols starting from a first OFDM symbol of the subframe.
The PBCH region may be allocated to the subframe on a frequency axis in a distributed form.
In another aspect of the present invention, provided herein is a method for broadcasting a physical broadcast channel (PBCH) signal at a base station in a wireless access system including broadcasting synchronization signals, allocating a PBCH region to a subframe based on a physical cell identifier (PCID) of the base station, and broadcasting the PBCH signal via the PBCH region in the subframe.

In another aspect of the present invention, provided herein is a base station for broadcasting a physical broadcast channel (PBCH) signal in a wireless access system including a transmitter and a processor configured to allocate a PBCH and to broadcast the PBCH signal, wherein the processor is configured to control the transmitter to broadcast synchronization signals, allocate a PBCH region to a subframe based on a physical cell identifier (PCID) of the base station, and control the transmitter to broadcast the PBCH signal via the PBCH region in the subframe.

The PBCH region may be allocated based on the PCID, the number of downlink resource blocks allocated to the subframe and the number of subcarriers included in the downlink resource block.

The PBCH region may be allocated to predetermined orthogonal frequency division multiplexing (OFDM) symbols starting from a first OFDM symbol of the subframe.

The PBCH region may be allocated to the subframe on a frequency axis in a distributed form.

At this time, one or more broadcast signals may be transmitted with the synchronization signals.

The afore-described aspects of the present invention are merely a part of preferred embodiments of the present invention. Those skilled in the art will derive and understand various embodiments reflecting the technical features of the present invention from the following detailed description of the present invention.

[Advantageous Effects]

According to the embodiments of the present invention, the following effects can be achieved.

First, it is possible to provide a method for configuring a new broadcast channel and a new method for broadcasting a broadcast channel signal, by using the embodiments of the present invention.

Second, it is possible to transmit a broadcast channel signal suitable for a small cell environment by using a new broadcast channel and a new broadcast channel transmission method in a small cell environment using a super high frequency band.

Third, it is possible to reduce inter-cell interference caused due to broadcast channel signal transmission, by using a newly allocated broadcast channel. For example, it is possible to reduce inter-cell interference caused due to the PBCH, by allocating a PBCH region in association with a physical cell identifier (PCID) so as to change a PBCH allocation region per cell.

In addition, the UE may easily detect such a broadcast channel and/or control channel region using the PCID.

It will be appreciated by persons skilled in the art that that the effects that can be achieved through the present invention are not limited to what has been particularly described hereinabove and other advantages of the present invention will be more clearly understood from the following detailed description.

[Description of Drawings]

The accompanying drawings, which are included to provide a further understanding of the invention, illustrate embodiments of the invention and together with the description serve to explain the principle of the invention. In the drawings:

FIG. 1 illustrates physical channels and a general signal transmission method using the physical channels, which may be used in embodiments of the present invention;
FIG. 2 illustrates radio frame structures used in embodiments of the present invention;
FIG. 3 illustrates a structure of a DownLink (DL) resource grid for the duration of one DL slot, which may be used in embodiments of the present invention;
FIG. 4 illustrates a structure of an UpLink (UL) subframe, which may be used in embodiments of the present invention;
FIG. 5 illustrates a structure of a DL subframe, which may be used in embodiments of the present invention;
FIG. 6 illustrates a cross carrier-scheduled subframe structure in the LTE-A system, which is used in embodiments of the present invention;
FIG. 7 is a diagram showing an example of an initial access procedure used in an LTE/LTE-A system;
FIG. 8 is a diagram showing one method for transmitting a broadcast channel signal;
FIG. 9 is a diagram showing frame structures, to which a control channel and/or a broadcast channel is allocated;
FIG. 10 is a diagram showing a subframe, to which a PBCH is allocated, within one frame structure;
FIG. 11 is a diagram showing one method for transmitting a PBCH signal;
FIG. 12 is a diagram showing an example of a PBCH detection method; and
FIG. 13 is a diagram showing a device for implementing the methods described with reference to FIGs. 1 to 12.

[Best Mode]

The following embodiments of the present invention provide a method for allocating a new broadcast channel, a method for allocating a new common control channel region, a method for transmitting and receiving a broadcast channel signal and/or a control channel signal, and a device supporting the same.

The embodiments of the present invention described below are combinations of elements and features of the present invention in specific forms. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or elements of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

In the embodiments of the present invention, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present invention, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a UE may serve as a transmitter and a BS may serve as a receiver, on an UpLink (UL). Likewise, the UE may serve as a receiver and the BS may serve as a transmitter, on a DL.

The embodiments of the present invention may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, and a 3GPP2 system. In particular, the embodiments of the present invention may be supported by the standard specifications, 3GPP TS 36.211, 3GPP TS 36.212, 3GPP TS 36.213, and 3GPP TS 36.321. That is, the steps or parts, which are not described to clearly reveal the technical idea of the present invention, in the embodiments of the present invention may be explained by the above standard specifications. All terms used in the embodiments of the present invention may be explained by the standard specifications.

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention.

The following detailed description includes specific terms in order to provide a thorough understanding of the present invention. However, it will be apparent to those skilled in the art that the specific terms may be replaced with other terms without departing the technical spirit and scope of the present invention.

For example, the term used in embodiments of the present invention, 'synchronization signal' is interchangeable with a synchronization sequence, a training symbol or a synchronization preamble in the same meaning.

The embodiments of the present invention can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present invention are described in the context of a 3GPP LTE/LTE-A system in order to clarify the technical features of the present invention, the present invention is also applicable to an IEEE 802.16e/m system, etc.

## 1. 3GPP LTE/LTE-A System

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

### 1.1 System Overview

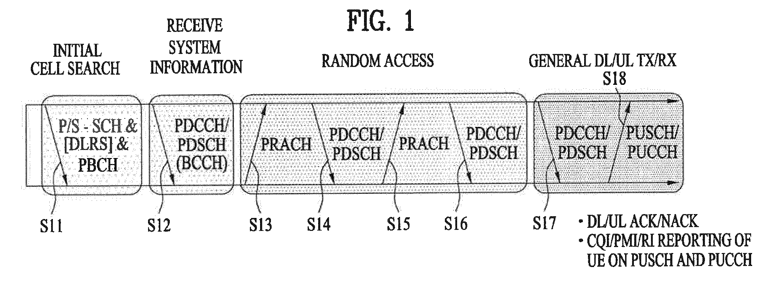

FIG. 1 illustrates physical channels and a general method using the physical channels, which may be used in embodiments of the present invention.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S 13 to S16). In the random access procedure, the UE may transmit a preamble on a Physical Random Access Channel (PRACH) (S 13) and may receive a PDCCH and a PDSCH associated with the PDCCH (S14). In the case of contention-based random access, the UE may additionally perform a contention resolution procedure including transmission of an additional PRACH (S 15) and reception of a PDCCH signal and a PDSCH signal corresponding to the PDCCH signal (S16).

After the above procedure, the UE may receive a PDCCH and/or a PDSCH from the eNB (S 17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

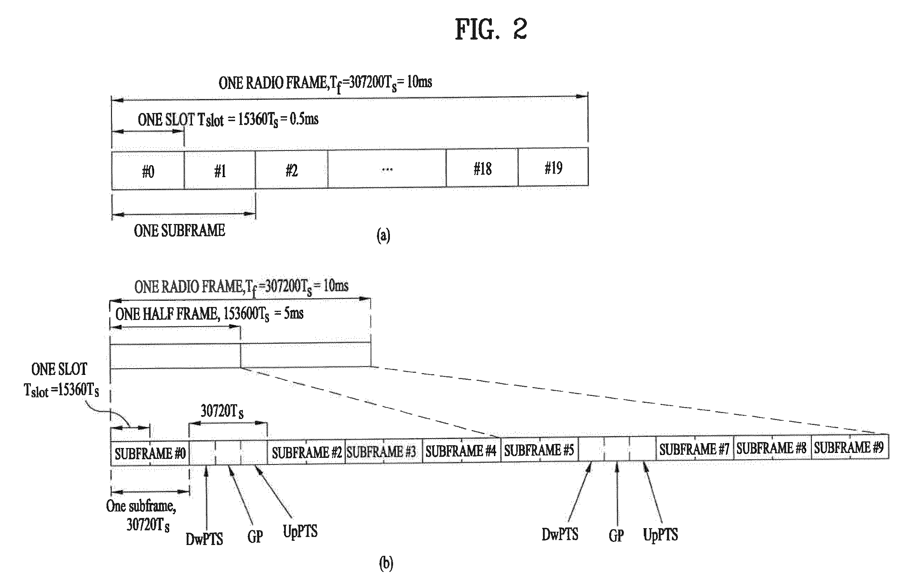

FIG. 2 illustrates exemplary radio frame structures used in embodiments of the present invention.

FIG. 2(a) illustrates frame structure type 1. Frame structure type 1 is applicable to both a full Frequency Division Duplex (FDD) system and a half FDD system.

One radio frame is 10ms ($T_f=307200 \cdot T_s$) long, including equal-sized 20 slots indexed from 0 to 19. Each slot is 0.5ms ($T_{slot}=15360 \cdot T_s$) long. One subframe includes two successive slots. An $i^{th}$ subframe includes $2i^{th}$ and $(2i+1)^{th}$ slots. That is, a radio frame includes 10 subframes. A time required for transmitting one subframe is defined as a Transmission Time Interval (TTI). Ts is a sampling time given as $T_s=1/(15kHz \times 2048)=3.2552 \times 10^{-8}$ (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms ($T_f$=307200·$T_s$) long, including two half-frames each having a length of 5ms (=153600·$T_s$) long. Each half-frame includes five subframes each being 1ms (=30720·$T_s$) long. An $i^{th}$ subframe includes $2i^{th}$ and $(2i+1)^{th}$ slots each having a length of 0.5ms ($T_{slot}$=15360·$T_s$). $T_s$ is a sampling time given as $T_s$=1/(15kHzx2048)=3.2552x10$^{-8}$ (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

[Table 1] below lists special subframe configurations (DwPTS/GP/UpPTS lengths).

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | 6592·$T_s$ | 2192·$T_s$ | 2560·$T_s$ | 7680·$T_s$ | 2192·$T_s$ | 2560·$T_s$ |
| 1 | 19760·$T_s$ | | | 20480·$T_s$ | | |
| 2 | 21952·$T_s$ | | | 23040·$T_s$ | | |
| 3 | 24144·$T_s$ | | | 25600·$T_s$ | | |
| 4 | 26336·$T_s$ | | | 7680·$T_s$ | 4384·$T_s$ | 5120·$T_s$ |
| 5 | 6592·$T_s$ | 4384·$T_s$ | 5120·$T_s$ | 20480·$T_s$ | | |
| 6 | 19760·$T_s$ | | | 23040·$T_s$ | | |
| 7 | 21952·$T_s$ | | | - | - | - |
| 8 | 24144·$T_s$ | | | - | - | - |

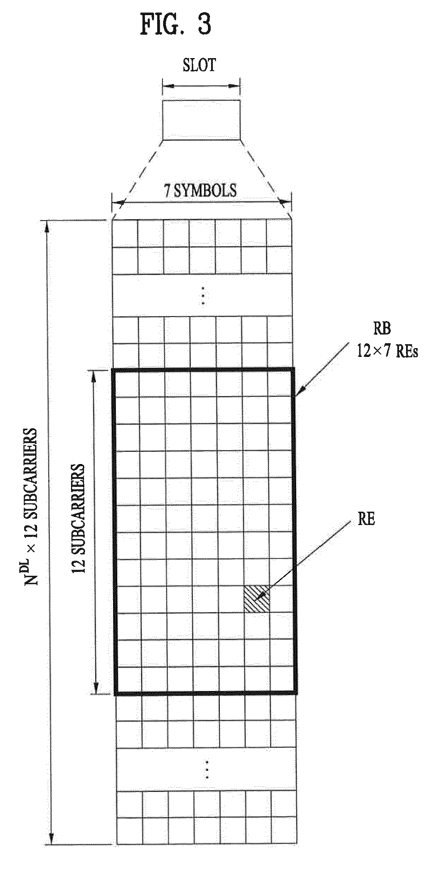

FIG. 3 illustrates an exemplary structure of a DL resource grid for the duration of one DL slot, which may be used in embodiments of the present invention.

Referring to FIG. 3, a DL slot includes a plurality of OFDM symbols in the time domain. One DL slot includes 7 OFDM symbols in the time domain and an RB includes 12 subcarriers in the frequency domain, to which the present invention is not limited.

Each element of the resource grid is referred to as a Resource Element (RE). An RB includes 12x7 REs. The number of RBs in a DL slot, NDL depends on a DL transmission bandwidth. A UL slot may have the same structure as a DL slot.

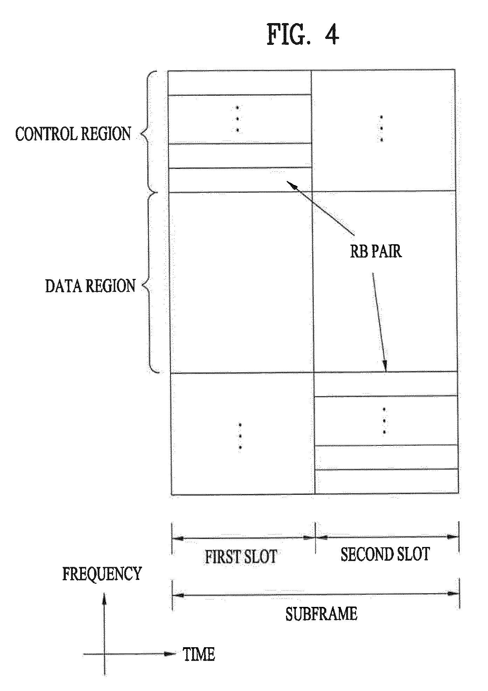

FIG. 4 illustrates a structure of a UL subframe which may be used in embodiments of the present invention.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

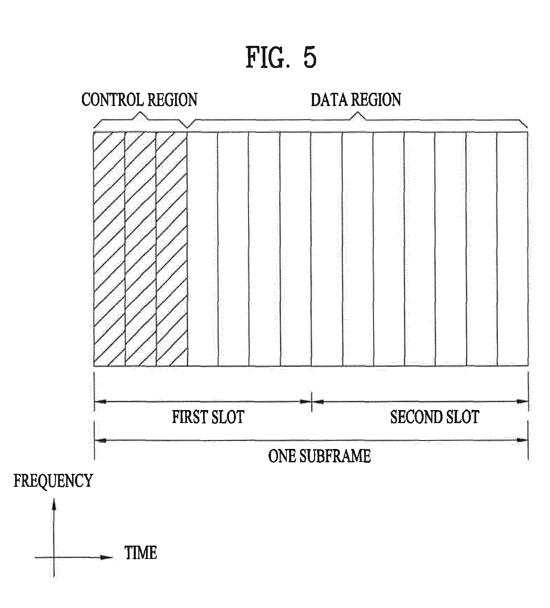

FIG. 5 illustrates a structure of a DL subframe that may be used in embodiments of the present invention.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e. the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

**2. Carrier Aggregation (CA) Environment**

**2.1 CA Overview**

A 3GPP LTE system (conforming to Rel-8 or Rel-9) (hereinafter, referred to as an LTE system) uses Multi-Carrier Modulation (MCM) in which a single Component Carrier (CC) is divided into a plurality of bands. In contrast, a 3GPP LTE-A system (hereinafter, referred to an LTE-A system) may use CA by aggregating one or more CCs to support a broader system bandwidth than the LTE system. The term CA is interchangeably used with carrier combining, multi-CC environment, or multi-carrier environment.

In the present invention, multi-carrier means CA (or carrier combining). Herein, CA covers aggregation of contiguous carriers and aggregation of non-contiguous carriers. The number of aggregated CCs may be different for a DL and a UL. If the number of DL CCs is equal to the number of UL CCs, this is called symmetric aggregation. If the number of DL CCs is different from the number of UL CCs, this is called asymmetric aggregation. The term CA is interchangeable with carrier combining, bandwidth aggregation, spectrum aggregation, etc.

The LTE-A system aims to support a bandwidth of up to 100MHz by aggregating two or more CCs, that is, by CA. To guarantee backward compatibility with a legacy IMT system, each of one or more carriers, which has a smaller bandwidth than a target bandwidth, may be limited to a bandwidth used in the legacy system.

For example, the legacy 3GPP LTE system supports bandwidths {1.4, 3, 5, 10, 15, and 20MHz} and the 3GPP LTE-A system may support a broader bandwidth than 20MHz using these LTE bandwidths. A CA system of the present invention may support CA by defining a new bandwidth irrespective of the bandwidths used in the legacy system.

There are two types of CA, intra-band CA and inter-band CA. Intra-band CA means that a plurality of DL CCs and/or UL CCs are successive or adjacent in frequency. In other words, the carrier frequencies of the DL CCs and/or UL CCs are positioned in the same band. On the other hand, an environment where CCs are far away from each other in frequency may be called inter-band CA. In other words, the carrier frequencies of a plurality of DL CCs and/or UL CCs are positioned in different bands. In this case, a UE may use a plurality of Radio Frequency (RF) ends to conduct communication in a CA environment.

The LTE-A system adopts the concept of cell to manage radio resources. The above-described CA environment may be referred to as a multi-cell environment. A cell is defined as a pair of DL and UL CCs, although the UL resources are not mandatory. Accordingly, a cell may be configured with DL resources alone or DL and UL resources.

For example, if one serving cell is configured for a specific UE, the UE may have one DL CC and one UL CC. If two or more serving cells are configured for the UE, the UE may have as many DL CCs as the number of the serving cells and as many UL CCs as or fewer UL CCs than the number of the serving cells, or vice versa. That is, if a plurality of serving cells are configured for the UE, a CA environment using more UL CCs than DL CCs may also be supported.

CA may be regarded as aggregation of two or more cells having different carrier frequencies (center frequencies). Herein, the term 'cell' should be distinguished from 'cell' as a geographical area covered by an eNB. Hereinafter, intra-band CA is referred to as intra-band multi-cell and inter-band CA is referred to as inter-band multi-cell.

In the LTE-A system, a Primacy Cell (PCell) and a Secondary Cell (SCell) are defined. A PCell and an SCell may be used as serving cells. For a UE in RRC_CONNECTED state, if CA is not configured for the UE or the UE does not support CA, a single serving cell including only a PCell exists for the UE. On the contrary, if the UE is in RRC_CONNECTED state and CA is configured for the UE, one or more serving cells may exist for the UE, including a PCell and one or more SCells.

Serving cells (PCell and SCell) may be configured by an RRC parameter. A physical-layer ID of a cell, PhysCellId is an integer value ranging from 0 to 503. A short ID of an SCell, SCellIndex is an integer value ranging from 1 to 7. A short ID of a serving cell (PCell or SCell), ServeCellIndex is an integer value ranging from 1 to 7. If ServeCellIndex is 0, this indicates a PCell and the values of ServeCellIndex for SCells are pre-assigned. That is, the smallest cell ID (or cell index) of ServeCellIndex indicates a PCell.

A PCell refers to a cell operating in a primary frequency (or a primary CC). A UE may use a PCell for initial connection establishment or connection reestablishment. The PCell may be a cell indicated during handover. In addition, the PCell is a cell responsible for control-related communication among serving cells configured in a CA environment. That is, PUCCH allocation and transmission for the UE may take place only in the PCell. In addition, the UE may use only the PCell in acquiring system information or changing a monitoring procedure. An Evolved Universal Terrestrial Radio Access Network (E-UTRAN) may change only a PCell for a handover procedure by a higher-layer RRCConnectionReconfiguraiton message including mobilityControlInfo to a UE supporting CA.

An SCell may refer to a cell operating in a secondary frequency (or a secondary CC). Although only one PCell is allocated to a specific UE, one or more SCells may be allocated to the UE. An SCell may be configured after RRC connection establishment and may be used to provide additional radio resources. There is no PUCCH in cells other than a PCell, that is, in SCells among serving cells configured in the CA environment.

When the E-UTRAN adds an SCell to a UE supporting CA, the E-UTRAN may transmit all system information related to operations of related cells in RRC_CONNECTED state to the UE by dedicated signaling. Changing system information may be controlled by releasing and adding a related SCell. Herein, a higher-layer RRCConnectionReconfiguration message may be used. The E-UTRAN may transmit a dedicated signal having a different parameter for each cell rather than it broadcasts in a related SCell.

After an initial security activation procedure starts, the E-UTRAN may configure a network including one or more SCells by adding the SCells to a PCell initially configured during a connection establishment procedure. In the CA environment, each of a PCell and an SCell may operate as a CC. Hereinbelow, a Primary CC (PCC) and a PCell may be used in the same meaning and a Secondary CC (SCC) and an SCell may be used in the same meaning in embodiments of the present invention.

### 2.2 Cross Carrier Scheduling

Two scheduling schemes, self-scheduling and cross carrier scheduling are defined for a CA system, from the perspective of carriers or serving cells. Cross carrier scheduling may be called cross CC scheduling or cross cell scheduling.

In self-scheduling, a PDCCH (carrying a DL grant) and a PDSCH are transmitted in the same DL CC or a PUSCH is transmitted in a UL CC linked to a DL CC in which a PDCCH (carrying a UL grant) is received.

In cross carrier scheduling, a PDCCH (carrying a DL grant) and a PDSCH are transmitted in different DL CCs or a PUSCH is transmitted in a UL CC other than a UL CC linked to a DL CC in which a PDCCH (carrying a UL grant) is received.

Cross carrier scheduling may be activated or deactivated UE-specifically and indicated to each UE semi-statically by higher-layer signaling (e.g. RRC signaling).

If cross carrier scheduling is activated, a Carrier Indicator Field (CIF) is required in a PDCCH to indicate a DL/UL CC in which a PDSCH/PUSCH indicated by the PDCCH is to be transmitted. For example, the PDCCH may allocate PDSCH resources or PUSCH resources to one of a plurality of CCs by the CIF. That is, when a PDCCH of a DL CC allocates PDSCH or PUSCH resources to one of aggregated DL/UL CCs, a CIF is set in the PDCCH. In this case, the DCI formats of LTE Release-8 may be extended according to the CIF. The CIF may be fixed to three bits and the position of the CIF may be fixed irrespective of a DCI format size. In addition, the LTE Release-8 PDCCH structure (the same coding and resource mapping based on the same CCEs) may be reused.

On the other hand, if a PDCCH transmitted in a DL CC allocates PDSCH resources of the same DL CC or allocates PUSCH resources in a single UL CC linked to the DL CC, a CIF is not set in the PDCCH. In this case, the LTE Release-8 PDCCH structure (the same coding and resource mapping based on the same CCEs) may be used.

If cross carrier scheduling is available, a UE needs to monitor a plurality of PDCCHs for DCI in the control region of a monitoring CC according to the transmission mode and/or bandwidth of each CC. Accordingly, an appropriate SS configuration and PDCCH monitoring are needed for the purpose.

In the CA system, a UE DL CC set is a set of DL CCs scheduled for a UE to receive a PDSCH, and a UE UL CC set is a set of UL CCs scheduled for a UE to transmit a PUSCH. A PDCCH monitoring set is a set of one or more DL CCs in which a PDCCH is monitored. The PDCCH monitoring set may be identical to the UE DL CC set or may be a subset of the UE DL CC set. The PDCCH monitoring set may include at least one of the DL CCs of the UE DL CC set. Or the PDCCH monitoring set may be defined irrespective of the UE DL CC set. DL CCs included in the PDCCH monitoring set may be configured to always enable self-scheduling for UL CCs linked to the DL CCs. The UE DL CC set, the UE UL CC set, and the PDCCH monitoring set may be configured UE-specifically, UE group-specifically, or cell-specifically.

If cross carrier scheduling is deactivated, this implies that the PDCCH monitoring set is always identical to the UE DL CC set. In this case, there is no need for signaling the PDCCH monitoring set. However, if cross carrier scheduling is activated, the PDCCH monitoring set is preferably defined within the UE DL CC set. That is, the eNB transmits a PDCCH only in the PDCCH monitoring set to schedule a PDSCH or PUSCH for the UE.

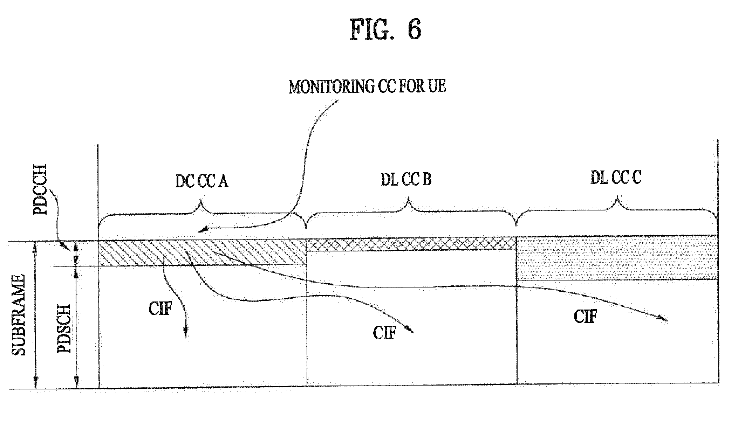

FIG. 6 illustrates a cross carrier-scheduled subframe structure in the LTE-A system, which is used in embodiments of the present invention.

Referring to FIG. 6, three DL CCs are aggregated for a DL subframe for LTE-A UEs. DL CC 'A' is configured as a PDCCH monitoring DL CC. If a CIF is not used, each DL CC may deliver a PDCCH that schedules a PDSCH in the same DL CC without a CIF. On the other hand, if the CIF is used by higher-layer signaling, only DL CC 'A' may carry a PDCCH that schedules a PDSCH in the same DL CC 'A' or another CC. Herein, no PDCCH is transmitted in DL CC 'B' and DL CC 'C' that are not configured as PDCCH monitoring DL CCs.

### 3. Common control channel and broadcast channel allocation method

#### 3.1 Initial access procedure

An initial access procedure may include a cell discovery procedure, a system information acquisition procedure and a random access procedure.

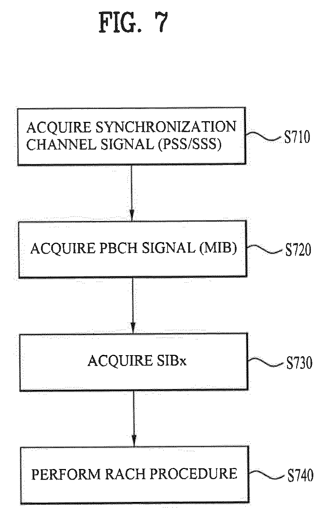

FIG. 7 is a diagram showing an example of an initial access procedure used in an LTE/LTE-A system.

A UE may receive synchronization signals (e.g., a primary synchronization signal (PSS) and a secondary synchronization signal (SSS)) transmitted from an eNB to acquire downlink synchronization information. The synchronization signals are transmitted twice per frame (at an interval of 10 ms). That is, the synchronization signals are transmitted at an interval of 5 ms (S710).

The downlink synchronization information acquired in step S710 may include a physical cell ID (PCID), downlink time and frequency synchronization and cyclic prefix (CP) length information.

Thereafter, the UE receives a physical broadcast channel (PBCH) signal transmitted via a PBCH. At this time, the PBCH signal is repeatedly transmitted four times in different scrambling sequences in four frames (that is, 40 ms) (S720).

The PBCH signal includes a master information block (MIB) as system information. One MIB has a total size of 24 bits and 14 bits thereof are used to indicate physical HARQ indicator channel (PHICH) configuration information, downlink cell bandwidth (dl-bandwidth) information and system frame number (SFN). The remaining 10 bits thereof are spare bits.

Thereafter, the UE may receive different system information blocks (SIBs) transmitted from the eNB to acquire the remaining system information. The SIBs are transmitted on a DL-SCH and presence/absence of the SIB is checked by a PDCCH signal masked with a system information radio network temporary identifier (SI-RNTI) (S730).

System information block type 1 (SIB1) of the SIBs includes parameters necessary to determine whether the cell is suitable for cell selection and information on scheduling of the other SIBs on a time axis. System information block type 2 (SIB2) includes common channel information and shared channel information. SIB3 to SIB8 include cell reselection related information, inter-frequency information, intra-frequency information, etc. SIB9 is used to deliver the name of a home eNodeB (HeNB) and SIB10 to SIB12 include an Earthquake and Tsunami Warning Service (ETWS) notification and a commercial mobile alert system (CMAS) message. SIB 13 includes MBMS related control information.

The UE may perform the random access procedure when steps S710 to S730 are performed. In particular, the UE may acquire parameters for transmitting a physical random access channel (PRACH) signal upon receiving SIB2 of the above-described SIBs. Accordingly, the UE may generate and transmit a PRACH signal using the parameters included in SIB2 to perform the random access procedure with the eNB (S740).

#### 3.2 Physical broadcast channel (PBCH)

In an LTE/LTE-A system, a PBCH is used for MIB transmission. Hereinafter, a method for configuring a PBCH will be described.

A block of bits $b(0),...,b(M_{bit}-1)$ is scrambled with a cell-specific sequence prior to modulation to calculate a block of scrambled bits $\tilde{b}(0),...,\tilde{b}(M_{bit}-1)$. At this time, $M_{bit}$ denotes the number of bits transmitted on the PBCH and is 1920 bits for normal cyclic prefix and 1728 bits for extended cyclic prefix.

Equation 1 below shows one of methods for scrambling the block of bits.

$$\text{Equation 1}$$

$$\tilde{b}(i) = \left(b(i) + c(i)\right) \bmod 2$$

In Equation 1, $c(i)$ denotes a scrambling sequence. The scrambling sequence is initialized with $c_{init} = N_{ID}^{cell}$ in each radio frame fulfilling $n_f \bmod 4 = 0$.

The block of scrambled bits $\tilde{b}(0),...,\tilde{b}(M_{bit}-1)$ is modulated to calculate a block of complex-valued modulation symbols $d(0),...,d(M_{symb}-1)$. At this time, a modulation scheme applicable to a physical broadcast channel is quadrature phase shift keying (QPSK).

The block of modulation symbols $d(0),...,d(M_{symb}-1)$ is mapped to one or more layers. At this time, $M_{symb}^{(0)} = M_{symb}$, Thereafter, the block of modulation symbols is precoded to calculate a block of vectors $y(i) = [y^{(0)}(i) ...$

$y^{(P-1)}(i)]^T$. At this time, i = 0,..., $M_{symb}$-1. In addition, $y^{(p)}(i)$ denotes a signal for an antenna port p, where $p = 0,...,P$-1 and $P \in \{1,2,4\}$. p denotes the number of an antenna port for a cell-specific reference signal.

The block of complex-valued symbols $y^{(p)}(0),...,y^{(p)}(M_{symb}$-1) for each antenna port is transmitted during 4 consecutive radio frames starting in each radio frame fulfilling $n_f$ mod 4 = 0. In addition, the block of complex-valued symbols is mapped to resource elements (k, l) not reserved for transmission of reference signals in increasing order of first the index k, then the index l of slot 1 of subframe 0 and finally the radio frame number. The resource element indices are given in Equation 2.

$$\text{Equation 2}$$

$$k = \frac{N_{RB}^{DL} N_{sc}^{RB}}{2} - 36 + k', \quad k' = 0,1,...,71$$
$$l = 0,1,...,3$$

Resource elements for reference signals are excluded from mapping. The mapping operation assumes that cell-specific reference signals for antenna ports 0 to 3 are present irrespective of the actual configuration. The UE assumes that the resource elements assumed to be reserved for reference signals in the mapping operation but not used for transmission of reference signals are not available for PDSCH transmission. The UE does not make any other assumptions about these resource elements.

3.3 MIB (master information block)

The MIB is system information transmitted on a PBCH. That is, the MIB includes system information transmitted via a BCH. A signaling radio bearer is not applicable to the MIB, a radio link control-service access point (RLC-SAP) is in a transparent mode (TM), a logical channel is a broadcast control channel (BCCH), and the MIB is transmitted from an E-UTRAN to a UE. Table 2 below shows an example of an MIB format.

Table 2

```
-- ASN1START

MasterInformationBlock ::=     SEQUENCE {
    dl-Bandwidth                  ENUMERATED {
                                    n6, n15, n25, n50, n75, n100},
    phich-Config                  PHICH-Config,
    systemFrameNumber             BIT STRING (SIZE (8)),
    spare                         BIT STRING (SIZE (10))
}

-- ASN1STOP
```

The MIB includes a downlink bandwidth (dl-Bandwidth) parameter, a PHICH configuration (PHICH-config) parameter, a system frame number (systemFrameNumber) parameter and spare bits.

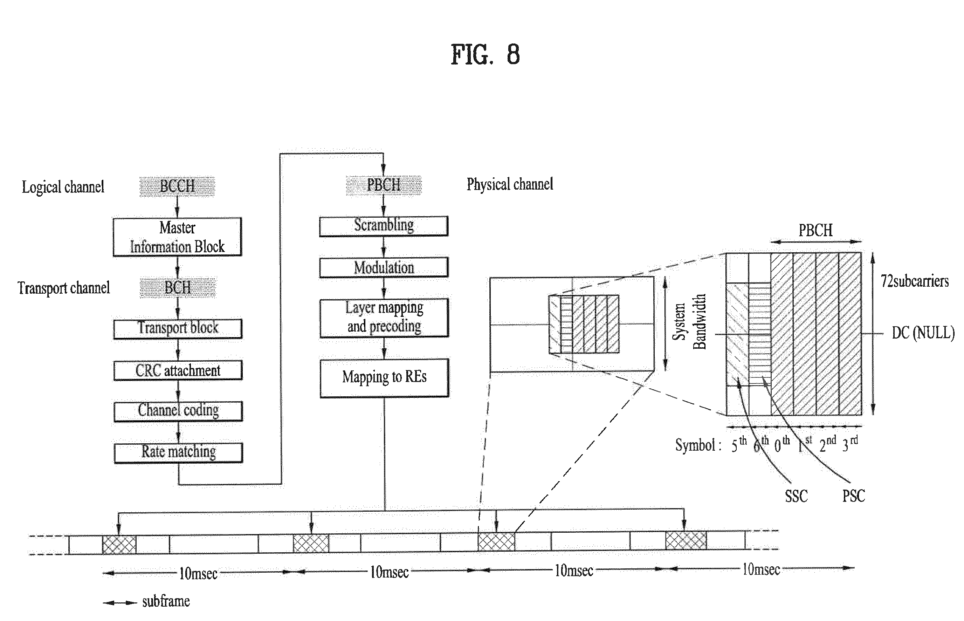

The downlink bandwidth parameter indicates 16 different transmission bandwidth configurations $N_{RB}$. For example, n6 corresponds to 6 resource blocks and n15 corresponds to 15 resource blocks. The PHICH configuration parameter indicates a PHICH configuration necessary to receive a control signal on a PDCCH necessary to receive a DL-SCH. The system frame number (SFN) parameter defines 8 most significant bits (MSBs) of the SFN. At this time, 2 least significant bits (LSBs) of the SFN are indirectly acquired via decoding of the PBCH. For example, timing of 40 ms PBCH TTI indicates 2 LSBs. This will be described in detail with reference to FIG. 8.

FIG. 8 is a diagram showing one method for transmitting a broadcast channel signal.

Referring to FIG. 8, an MIB transmitted via a BCCH, which is a logical channel, is delivered via a BCH which is a transport channel. At this time, the MIB is mapped to a transport block, and an MIB transport block is attached with CRC, is subjected to a channel coding and rate matching procedure and is delivered to a PBCH which is a physical channel. Thereafter, the MIB is subjected to scrambling and modulation procedures and a layer mapping and precoding procedure and then is mapped to a resource element (RE). That is, the same PBCH signal is scrambled and transmitted in different scrambling sequences during a period of 40 ms (that is, four frames). Accordingly, the UE may detect one PBCH every 40 ms via blind decoding and estimate the remaining 2 bits of the SFN.

For example, in a PBCH TTI of 40 ms, the LSB of the SFN is set to "00" when a PBCH signal is transmitted on a first radio frame, is set to "01" when the PBCH signal is transmitted on a second radio frame, is set to "10" when the PBCH signal is transmitted on a third radio frame, and is a set to "11" when the PBCH signal is transmitted on a last radio frame.

In addition, referring to FIG. 8, the PBCH may be allocated to 72 subcarriers located at the center of the first four OFDM symbols of a second slot (slot #1) of a first subframe (subframe #0) of each frame. At this time, a subcarrier region, to which the PBCH is allocated, is always a region corresponding to 72 center subcarriers irrespective of cell bandwidth. This allows detection of a PBCH even when downlink cell bandwidth is not known to the UE.

In addition, a primary synchronization channel (PSC), in which a primary synchronization signal (PSS) is transmitted, has a TTI of 5 ms and is allocated to a last symbol of a first slot (slot #0) of subframes #0 and #5 of each frame. A secondary synchronization channel (SSC), on which a secondary synchronization signal (SSS) is transmitted, has a TTI of 5 ms and is allocated to the second to last symbol (that is, a previous symbol of the PSS) of the same slot. In addition, the PSC and the SSC always occupy 72 center subcarriers irrespective of cell bandwidth and are allocated to 62 subcarriers.

### 3.5 Methods for allocating Control channel region and broadcast channel region

Meanwhile, in a super high frequency wireless communication system or a small cell environment, an environment having small cell coverage is established. In the super high frequency wireless communication system, path loss is greater than that of a legacy cellular band due to propagation characteristics. Accordingly, in the super high frequency wireless communication system, cell coverage is less than that of the legacy cellular system. Therefore, in the small cell environment using the super high frequency band, the SNR of a signal received by the UE may have a relatively high value. This may require relatively low robustness when an eNB transmits a PBCH.

In an LTE/LTE-A system (e.g., LTE Rel-8/9/10), a PBCH region is always allocated to a fixed frequency position. However, this may cause inter-cell interference. In addition, an SIB is transmitted on a PDSCH, but SIB 1 including scheduling information of SIB2 to SIB 13 is transmitted on a fifth subframe of every frame in the time domain and thus has restriction in the time domain.

In an LTE/LTE-A system, for transmission of DL grant of a PDSCH used for paging, SIB and random access response (RAR) transmission, a PDCCH signal is transmitted via a common search space (CSS). In addition, for uplink power control message transmission, the PDCCH signal is transmitted via the CSS.

Recently, for more efficient and robust transmission, an e-PDCCH for transmitting a PDCCH via a PDSCH, which is a data channel, has been discussed. A method for transmitting a PDCCH signal, which has been transmitted via the CSS as well as a UE-specific search space (USS), via an e-PDCCH has been discussed. Accordingly, the UE may perform blind decoding (BD) in order to decode a control channel signal transmitted in a PDSCH region.

The embodiments of the present invention provide methods for performing PBCH or control channel allocation and control signal transmission, which are capable of avoiding inter-cell interference and are compatible with a data channel region. In addition, a method for enabling a UE to easily acquiring a region in which a PBCH and a common control channel are transmitted is provided. The embodiments of the present invention do not relate to a method for transmitting a PDCCH using a conventional TDM scheme but relate to an e-PDCCH transmission method in which both the CSS and the USS are allocated to the PDSCH region.

### 3.5.1 Subframe structure

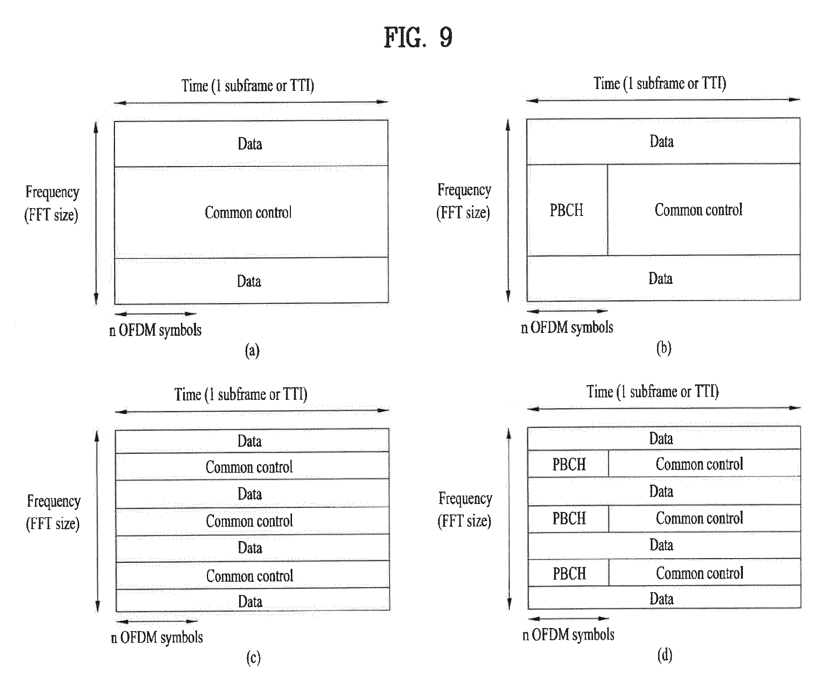

FIG. 9 is a diagram showing frame structures, to which a control channel and/or a broadcast channel are allocated.

FIG. 9(a) is a diagram showing one subframe structure in which a common control channel is allocated to a PDSCH region. That is, FIG. 9(a) shows a subframe structure in which a common search space (CSS) is allocated to a data channel.

FIG. 9(b) shows a subframe structure when a PBCH region is allocated to n OFDM symbols from the beginning of the frequency region of a subframe in the CSS. Referring to FIG. 9(b), a PDSCH for allocating a common control channel may be allocated in a predetermined frequency region of the subframe and a PBCH region may be allocated to first to n-th OFDM symbols of the PDSCH. At this time, the common control channel means a control channel transmitted via the CSS. In the common control channel, a control channel transmitted via the USS may also be configured.

FIG. 9(c) shows an example of a subframe structure in which the common control channel is allocated in the frequency region in a distributed form. That is, FIG. 9(c) shows the case in which the common control channel described with respect to FIG. 9(a) is repeatedly allocated with the data channel on the frequency axis.

FIG. 9(d) shows a subframe structure in which the PBCH region and common control channel described with reference to FIG. 9(b) are allocated in a distributed form. That is, the PBCH region and the common control channel are repeatedly allocated with the data channel on the frequency axis.

The PBCH and/or common control channel described with reference to FIGs. 9(a) to 9(d) may be allocated in association with the physical cell identifier (PCID). In a legacy LTE/LTE-A system, since all cells always allocate PBCHs in the center frequency with a size of 6 RBs regardless of bandwidth, the PBCH of each cell may cause interference with the PBCH of a neighboring cell. However, when a PBCH is allocated in association with the PCID in the present invention, since the allocation position of the PBCH region changes according to cell, interference may be not caused.

### 3.5.2 Control channel detection method

When the PBCH and/or the common control channel are allocated as shown in FIG. 9(a) or 9(b), the UE may detect the PBCH and/or the common control channel region. Hereinafter, various methods for detecting the PBCH and/or the common control channel at the UE will be described.

The UE may detect the PBCH and/or the common control channel region based on a physical cell ID (PCID). The PCID is defined as $N_{ID}^{cell}$, $N_{RB}^{DL}$ denotes the number of downlink resource blocks of the subframe, and $N_{sc}^{RB}$ denotes the number of subcarriers present in one RB.

At this time, a region, to which the PBCH or the common control channel is allocated, may be given as shown in Equation 3 or 4 below.

$$\text{Equation 3}$$

$$k = (N_{sc}^{RB} / 2) \cdot (N_{ID}^{cell} \bmod 2 N_{RB}^{DL})$$

$$\text{Equation 4}$$

$$k = N_{ID}^{cell} \bmod N_{RB}^{DL}$$

In Equations 3 and 4, k denotes the index of a subcarrier, to which the PBCH or the common control channel is allocated. That is, when k indicates the index of the subcarrier, to which the PBCH is allocated, the PBCH is allocated to a predetermined subcarrier region starting from the subcarrier indicated by the subcarrier index k during an interval from a first OFDM symbol to n-th OFDM symbol of the subframe. Accordingly, the UE may detect the PBCH and/or the common control channel allocated thereto via blind decoding, starting from the subcarrier indicated by the subcarrier index k.

In the embodiments of the present invention, a frequency region in which the PBCH or the common control channel is transmitted may be determined based on the PCID.

In the embodiments of the present invention, the PBCH region is allocated in association with the physical cell identifier (PCID) to change the PBCH allocation region according to cell. Accordingly, it is possible to reduce inter-cell interference caused due to PBCH signal transmission.

### 3.5.3 Control channel detection method - 2

Various methods for detecting the PBCH and/or the common control channel at the UE when the PBCH and/or the common control channel are allocated as shown in FIG. 9(c) or 9(d) will be described.

As in Chapter 3.5.1, a control channel region to be transmitted may be determined based on the PCID. However, in order to increase the degree of freedom of control channel allocation or to obtain frequency diversity, a region, to which the common control channel is allocated, and a region, to which the PBCH is allocated, may be allocated as shown in FIG. 9(c) and 9(d).

In this case, the region, to which the PBCH and/or the common control channel are allocated, may have predetermined candidate groups. When the PBCH and/or the common control channel are allocated in the distributed form, the region, to which the PBCH or the common control channel is allocated, may be determined as shown in Equation 5 below.

Equation 5

$$k_1 = (N_{sc}^{RB}/2) \cdot (N_{ID}^{cell} \bmod 2N_{RB}^{DL})$$

$$k_2 = (N_{sc}^{RB}/2) \cdot (N_{ID}^{cell} \bmod 2N_{RB}^{DL}) + \lfloor N_{RB}^{DL}/2 \rfloor \cdot N_{sc}^{RB}/2$$

$$k_3 = (N_{sc}^{RB}/2) \cdot (N_{ID}^{cell} \bmod 2N_{RB}^{DL}) + \lfloor 2N_{RB}^{DL}/2 \rfloor \cdot N_{sc}^{RB}/2$$

...

$$k_n = (N_{sc}^{RB}/2) \cdot (N_{ID}^{cell} \bmod 2N_{RB}^{DL}) + \lfloor (n-1) \cdot N_{RB}^{DL}/2 \rfloor \cdot N_{sc}^{RB}/2$$

Accordingly, according to Equation 5, the UE may detect the PBCH and/or the common control channel from the candidate groups indicated by n subcarrier indices $k_n$ via blind decoding.

When the PBCH and/or the common control channel are allocated in the distributed form as shown in FIG. 9(c) or 9(d), the size of each channel region or the number n of candidate groups may be defined as a system parameter. In addition, the UE may acquire or already know information about the size of the channel region or the number of candidate groups, upon accessing a network.

### 3.5.4 Control channel detection method - 3

As in Chapter 3.5.2 or 3.5.3, the UE cannot accurately identify the control region only using the index of the subcarrier, to which the PBCH and/or the common control channel are allocated. In this case, search spaces which are detected by the UE via blind decoding may extremely increase. Accordingly, hereinafter, a method of explicitly indicating, to the UE, the size of the region, to which the PBCH and/or the common control channel are allocated, will be described.

For example, the region to which the PBCH and/or the common control channel are allocated may be configured in a fixed form. That is, the information about the entire region, to which the PBCH and/or the common control channel are allocated, may be configured as a system parameter.

In a legacy LTE/LTE-A system, a PBCH region is allocated to 6 RBs based on the center frequency. In the embodiments of the present invention, if it is assumed that the same channel coding scheme and CRC parity bits as the LTE/LTE-A system are used for the PBCH, the UE may recognize the resource region corresponding to 6 RBs from the subcarrier index k derived from Equations 3 to 5 as the PBCH and/or the common control channel region. Of course, this is only exemplary and the PBCH and/or common control channel region may be set to arbitrary x RBs.

Alternatively, the PBCH and/or common control channel region may be set to RBs less in number than 6 RBs according to a small cell environment. For example, the PBCH and/or the common control channel region may be allocated with a size of one of 1 RB, 2 RBs, 3 RBs, 4 RBs or 5 RBs.

### 3.5.5 Frame structure

The methods described in Chapters 3.5.1 to 3.5.4 are applicable to one subframe, that is, every subframe. However, in the small cell environment, on the assumption that the amount of data (that is, resource blocks) necessary to transmit the PBCH signal is small, allocation of the PBCH to every subframe may cause resource waste. That is, the PBCH does not need to be allocated to every subframe. Accordingly, hereinafter, a method for allocating the PBCH and/or the common control channel only to a specific subframe within the frame structure will be described.

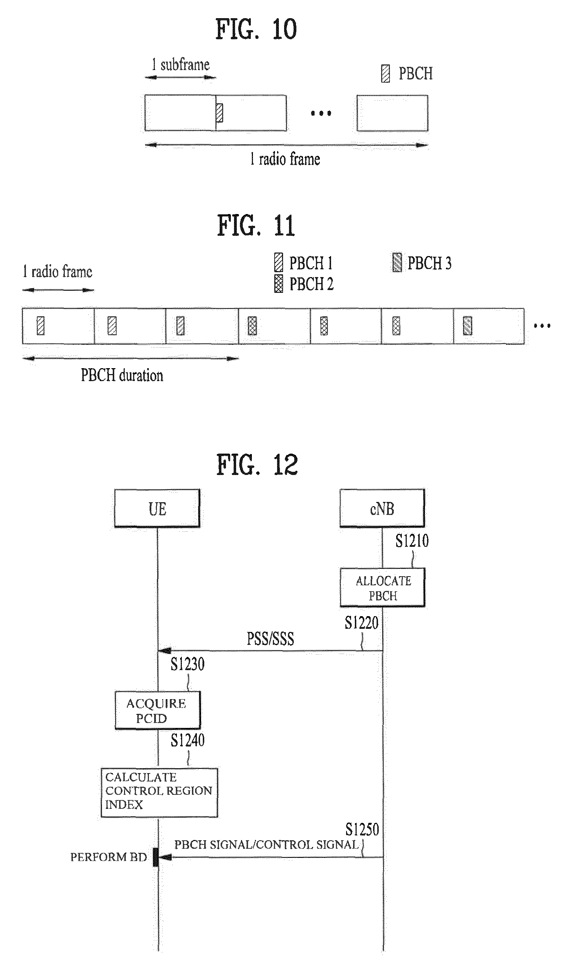

FIG. 10 is a diagram showing a subframe, to which a PBCH is allocated, within one frame structure.

Referring to FIG. 10, the PBCH may be allocated to an m-th subframe within one radio resource. At this time, one radio frame means a bundle of p subframes. For example, in a 3GPP LTE/LTE-A system, 10 subframes configure one radio frame.

In addition, the PBCH may be allocated to a plurality of subframes within one radio frame. At this time, the PBCH is allocated to $m_1$-th, $m_2$-th, ..., $m_r$-th subframes. FIG. 10 shows the frame structure when the PBCH is allocated to a second subframe within the radio frame.

### 3.5.6 PBCH signal transmission method

For robust transmission of a PBCH signal, a PBCH having a repeated form may be configured. For example, PBCHs allocated within a predetermined number of radio frames may have the same information and the UE may combine the PBCH signals to be received so as to increase reception performance.

FIG. 11 is a diagram showing one method for transmitting a PBCH signal.

As in Chapter 3.5.5, assume that the PBCH is allocated to a specific subframe within a radio frame and the transmission period of the PBCH signal may be 3 radio frames. That is, the PBCH signals transmitted on three radio frames are transmitted with the same information. However, in the embodiments of the present invention, transmission of the PBCH signal in the repeated form means that the information transmitted via the PBCH is the same. That is, scrambling codes, bit interleaving, CRC parity bits, channel coding schemes, etc. of the PBCH signals may be different.

### 3.5.7 PBCH detection method

FIG. 12 is a diagram showing an example of a PBCH detection method.

An eNB may allocate a PBCH and/or a common control channel region (S1210).

In step S1210, the method for allocating the PBCH and/or the common control channel region may be performed using the methods described in Chapters 3.5.1, 3.5.5 and/or 3.5.6.

The eNB may broadcast synchronization signals (that is, PSS/SSS) and the UE may acquire the PCID of the cell using the synchronization signals (S1220 and S1230).

The UE may calculate a subcarrier index k indicating a control region using the methods described in Chapters 3.5.2 to 3.5.4 using the PCID. At this time, the subcarrier index k may be referred to as a control region index (S1240).

Thereafter, the UE may detect the PBCH and/or the common control channel region starting from the subcarrier indicated by the subcarrier index k via blind decoding and receive the PBCH signal and/or the control signal via the detected PBCH and/or the common control channel (S1250).

If the PBCH region has a predetermined size and is predetermined as a system parameter, the UE may decode a predetermined region starting from the subcarrier indicated by the subcarrier index k without performing BD in step S1250, thereby receiving the PBCH signal and/or the control signal.

In FIG. 12, the PBCH allocation and the PBCH signal transmission method were only described. However, the method described in FIG. 12 is equally applicable to common control channel allocation and transmission of a control signal via the common control channel.

### 4. Apparatuses

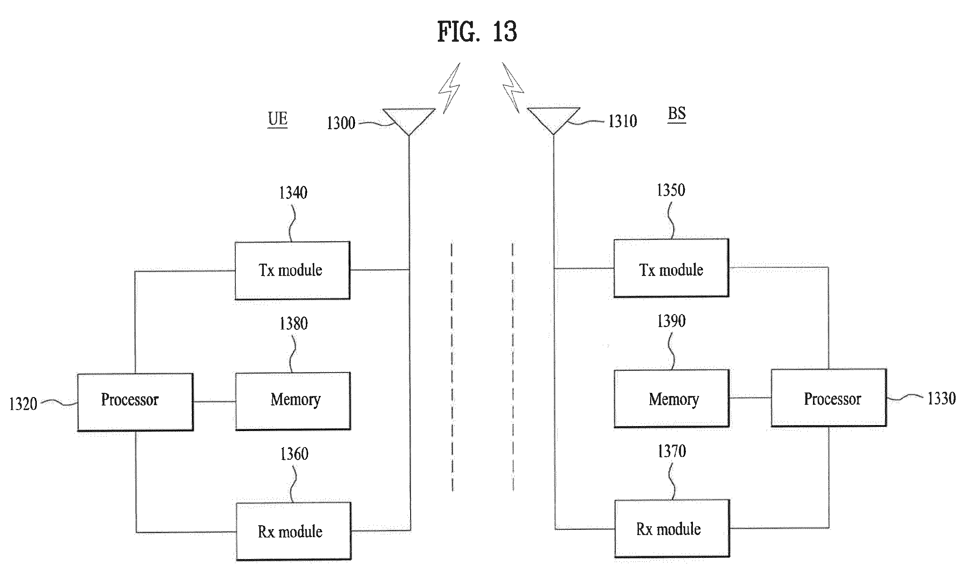

Apparatuses illustrated in FIG. 13 are means that can implement the methods described before with reference to FIGS. 1 to 12.

A UE may act as a transmitter on a UL and as a receiver on a DL. A BS may act as a receiver on a UL and as a transmitter on a DL.

That is, each of the UE and the BS may include a Transmitter (Tx) 1340 or 1350 and Receiver (Rx) 1360 or 1370, for controlling transmission and reception of information, data, and/or messages, and an antenna 1300 or 1310 for transmitting and receiving information, data, and/or messages.

Each of the UE and the BS may further include a processor 1320 or 1330 for implementing the afore-described embodiments of the present invention and a memory 1380 or 1490 for temporarily or permanently storing operations of the processor 1320 or 1330.

The embodiments of the present invention may be performed using the components and functions of the above-described UE and BS. For example, the processor of the BS may combine methods disclosed in Chapters 1 to 3 to allocate and transmit the PBCH. The processor of the UE derives the PCID based on the received synchronization signals and calculates the subcarrier index k indicating the region, to which the PBCH is allocated, using the PCID, thereby receiving the PBCH signal. For such operation, refer to the methods described with reference to FIGs. 9 to 12.

The Tx and Rx of the UE and the BS may perform a packet modulation/demodulation function for data transmission, a high-speed packet channel coding function, OFDMA packet scheduling, TDD packet scheduling, and/or channelization. Each of the UE and the BS of FIG. 13 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present invention may be achieved by various means, for example, hardware, firmware, software, or a combination thereof.

In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present invention may be implemented in the form of a module, a procedure, a function, etc. performing the above-described functions or operations. A software code may be stored in the memory 1380 or 1390 and executed by the processor 1340 or 1330. The memory is located at the interior or exterior of the processor and may transmit and receive data to and from the processor via various known means.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the present invention or included as a new claim by a subsequent amendment after the application is filed.

[Industrial Applicability]

Embodiments of the present invention are applicable to various wireless access systems including a 3GPP system, a 3GPP2 system, and/or an IEEE 802.xx system. In addition to these wireless access systems, the embodiments of the present invention are applicable to all technical fields in which the wireless access systems find their applications.

**Claims**

1.  A method for receiving a physical broadcast channel (PBCH) signal in a wireless access system, the method comprising:

    receiving synchronization signals;
    acquiring a physical cell identifier (PCID) based on the synchronization signals;
    calculating a subcarrier index indicating a PBCH region based on the PCID;
    performing blind decoding starting from a subcarrier indicated by the subcarrier index in a subframe to detect the PBCH region; and
    receiving the PBCH signal broadcast via the PBCH region.

2.  The method according to claim 1, wherein the subcarrier index is calculated using the PCID, a number of downlink resource blocks allocated to the subframe and a number of subcarriers included in the downlink resource block.

3.  The method according to claim 2, wherein the PBCH region is allocated to predetermined orthogonal frequency division multiplexing (OFDM) symbols starting from a first OFDM symbol of the subframe.

4.  The method according to claim 3, wherein the PBCH region is allocated to the subframe on a frequency axis in a distributed form.

5.  A method for broadcasting a physical broadcast channel (PBCH) signal at a base station in a wireless access system, the method comprising:

    broadcasting synchronization signals;
    allocating a PBCH region to a subframe based on a physical cell identifier (PCID) of the base station; and
    broadcasting the PBCH signal via the PBCH region in the subframe.

6.  The method according to claim 5, wherein the PBCH region is allocated based on the PCID, the number of downlink resource blocks allocated to the subframe and the number of subcarriers included in the downlink resource block.

7. The method according to claim 6, wherein the PBCH region is allocated to predetermined orthogonal frequency division multiplexing (OFDM) symbols starting from a first OFDM symbol of the subframe.

8. The method according to claim 7, wherein the PBCH region is allocated to the subframe on a frequency axis in a distributed form.

9. A user equipment (UE) for receiving a physical broadcast channel (PBCH) signal in a wireless access system, the UE comprising:

a receiver; and
a processor configured to detect the PBCH signal,
wherein the processor is configured to:

control the receiver to receive synchronization signals;
acquire a physical cell identifier (PCID) based on the synchronization signals;
calculate a subcarrier index indicating a PBCH region based on the PCID;
perform blind decoding starting from a subcarrier indicated by the subcarrier index in a subframe to detect the PBCH region; and
control the receiver to receive the PBCH signal broadcast via the PBCH region.

10. The UE according to claim 9, wherein the subcarrier index is calculated using the PCID, a number of downlink resource blocks allocated to the subframe and a number of subcarriers included in the downlink resource block.

11. The UE according to claim 10, wherein the PBCH region is allocated to predetermined orthogonal frequency division multiplexing (OFDM) symbols starting from a first OFDM symbol of the subframe.

12. The UE according to claim 11, wherein the PBCH region is allocated to the subframe on a frequency axis in a distributed form.

13. A base station for broadcasting a physical broadcast channel (PBCH) signal in a wireless access system, the base station comprising:

a transmitter; and
a processor configured to allocate a PBCH and to broadcast the PBCH signal,
wherein the processor is configured to:

control the transmitter to broadcast synchronization signals;
allocate a PBCH region to a subframe based on a physical cell identifier (PCID) of the base station; and
control the transmitter to broadcast the PBCH signal via the PBCH region in the subframe.

14. The base station according to claim 13, wherein the PBCH region is allocated based on the PCID, the number of downlink resource blocks allocated to the subframe and the number of subcarriers included in the downlink resource block.

15. The base station according to claim 14, wherein the PBCH region is allocated to predetermined orthogonal frequency division multiplexing (OFDM) symbols starting from a first OFDM symbol of the subframe.

16. The base station according to claim 15, wherein the PBCH region is allocated to the subframe on a frequency axis in a distributed form.

# FIG. 1

| INITIAL CELL SEARCH | RECEIVE SYSTEM INFORMATION | RANDOM ACCESS | | | | GENERAL DL/UL TX/RX |
|---|---|---|---|---|---|---|

P/S - SCH & [DLRS] & PBCH

PDCCH/ PDSCH (BCCH)

PRACH

PDCCH/ PDSCH

PRACH

PDCCH/ PDSCH

S18

PDCCH/ PDSCH

PUSCH/ PUCCH

S11   S12   S13   S14   S15   S16   S17   • DL/UL ACK/NACK
• CQI/PMI/RI REPORTING OF UE ON PUSCH AND PUCCH

EP 2 978 151 A2

# FIG. 2

ONE RADIO FRAME, $T_f = 307200 T_s = 10ms$

ONE SLOT $T_{slot} = 15360 T_s = 0.5ms$

| #0 | #1 | #2 | ... | #18 | #19 |

ONE SUBFRAME

(a)

ONE RADIO FRAME, $T_f = 307200 T_s = 10ms$

ONE HALF FRAME, $153600 T_s = 5ms$

ONE SLOT $T_{slot} = 15360 T_s$

$30720 T_s$

| SUBFRAME #0 | | | | SUBFRAME #2 | SUBFRAME #3 | SUBFRAME #4 | SUBFRAME #5 | | | | SUBFRAME #7 | SUBFRAME #8 | SUBFRAME #9 |

One subframe, $30720 T_s$

DwPTS    GP    UpPTS

DwPTS    GP    UpPTS

(b)

EP 2 978 151 A2

# FIG. 3

# FIG. 4

# FIG. 5

CONTROL REGION  DATA REGION

FIRST SLOT    SECOND SLOT

ONE SUBFRAME

FREQUENCY

TIME

# FIG. 6

# FIG. 7

```
┌────────────────────────────┐
│ ACQUIRE SYNCHRONIZATION     │ ── S710
│ CHANNEL SIGNAL (PSS/SSS)    │
└────────────────────────────┘
              │
              ▼
┌────────────────────────────┐
│ ACQUIRE PBCH SIGNAL (MIB)   │ ── S720
└────────────────────────────┘
              │
              ▼
┌────────────────────────────┐
│       ACQUIRE SIBx          │ ── S730
└────────────────────────────┘
              │
              ▼
┌────────────────────────────┐
│ PERFORM RACH PROCEDURE      │ ── S740
└────────────────────────────┘
```

# FIG. 8

# FIG. 9

Time (1 subframe or TTI)

| | |
|---|---|
| Data | |
| Common control | |
| Data | |

Frequency (FFT size)

n OFDM symbols

(a)

Time (1 subframe or TTI)

| | |
|---|---|
| Data | |
| PBCH | Common control |
| Data | |

Frequency (FFT size)

n OFDM symbols

(b)

Time (1 subframe or TTI)

| |
|---|
| Data |
| Common control |
| Data |
| Common control |
| Data |
| Common control |
| Data |

Frequency (FFT size)

n OFDM symbols

(c)

Time (1 subframe or TTI)

| | |
|---|---|
| Data | |
| PBCH | Common control |
| Data | |
| PBCH | Common control |
| Data | |
| PBCH | Common control |
| Data | |

Frequency (FFT size)

n OFDM symbols

(d)

EP 2 978 151 A2

# FIG. 10

1 subframe

▨ PBCH

1 radio frame

# FIG. 11

1 radio frame

▨ PBCH 1
▩ PBCH 2

▨ PBCH 3

PBCH duration

# FIG. 12

UE                                    eNB

S1210

ALLOCATE
PBCH

S1220

PSS/SSS

S1230

ACQUIRE
PCID

S1240

CALCULATE
CONTROL REGION
INDEX

S1250

PBCH SIGNAL/CONTROL SIGNAL

PERFORM BD

# FIG. 13

UE     1300

1340

Tx module

1380

1320 — Processor    Memory

1360

Rx module

BS

1310

1350

Tx module

1390

Memory    Processor — 1330

1370

Rx module

EP 2 978 151 A2